# EUROPEAN PATENT SPECIFICATION

(11) **EP 2 985 930 B1**
(45) Date of publication and mention of the grant of the patent: **07.03.2018**
(21) Application number: 13882022.0
(22) Date of filing: 13.09.2013
(51) Int. Cl.: H04B 10/294, H04B 10/07, H04B 10/079, H04B 10/564, H04J 14/02, H04L 27/01

(54) **EQUALIZATION METHOD AND DEVICE FOR OPTICAL POWER**
ENTZERRUNGSVERFAHREN UND -VORRICHTUNG FÜR EINE OPTISCHE LEISTUNG
PROCÉDÉ ET DISPOSITIF D'ÉGALISATION DE PUISSANCE OPTIQUE

(30) Priority: 10.04.2013 CN 201310122436
(43) Date of publication of application: 17.02.2016
(73) Proprietor: ZTE Corporation, Shenzhen, Guangdong 518057 (CN)
(72) Inventor: HUA, Feng, Shenzhen, Guangdong province 518057 (CN); SHEN, Bailin, Shenzhen, Guangdong province 518057 (CN)
(74) Representative: Novagraaf Technologies
(86) International application number: PCT/CN2013/083485
(87) International publication number: WO 2014/166207

(56) References cited:
- WO-A1-2012/083311
- CN-A- 1 336 741
- CN-A- 1 339 891
- CN-A- 102 761 365
- US-A1- 2004 208 515
- US-A1- 2007 036 548
- US-A1- 2008 267 631
- US-A1- 2012 321 306
- RONGQING HUI ET AL: "Subcarrier Multiplexing for High-Speed Optical Transmission", JOURNAL OF LIGHTWAVE TECHNOLOGY, IEEE SERVICE CENTER, NEW YORK, NY, US, vol. 20, no. 3, 1 March 2002 (2002-03-01), XP011030141, ISSN: 0733-8724

## Description

### Technical Field

The present disclosure relates to the field of communications, in particular to an optical power equalization method and apparatus.

### Background

A reconfigurable optical add drop multiplexer (ROADM) can achieve local adding and dropping as well as direct through of a channel wavelength through software configuration, thereby enhancing the flexibility of optical network service transmission. A conventional wavelength division multiplexing system adopts a fixed grid technology, with the channel grid fixed to be 50GHz or 100GHz. Beyond 100G transmission technology drives the requirement for a flexible grid (gridless or flexible grid), that is, the width of the channel grid is changeable to adapt to the requirements of wavelength division multiplexing transmission with different modulation code types and different speed rates. The flexible grid technology was first preliminarily standardized by the standard G.694.1 of the study group fifteen of international telecommunication union (ITU-T SG15) in February 2011, with the internal version of the draft manuscript standardized as V1.2, in which the nominal central frequency of the frequency gap is specified to be 193.1 + n*0.00625, where n is an integer, and the frequency width is specified to be 12.5 GHz*m, where m is a positive integer. A ROADM system supporting the flexible grid technology is usually referred to as Flex ROADM system for short.

In a dense wavelength division multiplexing (DWDM) optical transmission system, since the loss or gain of a transmission optical fibre, an optical amplifier and other optical components is relevant to a wavelength, the power of each channel in an optical transmission link is unequal under normal conditions. In addition, optical fibre transmission within a wide band range would enhance certain non-linear effects of the optical fibre, for example, the influence of the stimulated raman scattering (SRS) effect can cause the power of a short wavelength channel of a DWDM signal to transfer to a long wavelength channel, resulting in the problems that the optical power reaching a receiver exceeds a reception range, and the signal-to-noise ratio in a part of channels at a receiving end is too low, etc., thereby influencing the performance of the system. For the over 100 G signal transmitted in the Flex ROADM system, the optical channel thereof may be composed of a plurality of sub-carriers, and it is also necessary to perform power equalization among the plurality of sub-carriers, that is, in the Flex ROADM system, there is not only the requirement of optical power equalization between optical channels, but also the requirement of optical power equalization among all sub-carriers inside the optical channel.

Aiming at the problem in the related art that the requirement of the optical power equalization among optical channels in the Flex ROADM system and the requirement of the optical power equalization among all sub-carriers inside the optical channel cannot be satisfied, no effective solution has been provided at present.

The Document "RONGQING HUI ET AL: 'Subcarrier Multiplexing for High-Speed Optical Transmission', JOURNAL OF LIGHTWAVE TECHNOLOGY, IEEE SERVICE CENTER, NEW YORK, NY, US, vol. 20, no. 3, 1 March 2002 (2002-03-01), XP011030141, ISSN:0733-8724", US2004/208515, US2008/267631, WO2012/083311 and US2012/321306 provide related technical solutions.

### Summary

Provided are an optical power equalization method and apparatus so as to solve at least the above-mentioned problem.

According to an aspect of the embodiments of the present disclosure, an optical power equalization method applied to a flexible grid reconfigurable optical add drop multiplexer (Flex ROADM) system is provided, including: judging, according to an optical power monitoring result and an optical power control target value of an optical channel, whether optical power equalization needs to be performed on the optical channel; and when a judgement result is that the optical power equalization needs to be performed on the optical channel, performing equalization on an optical power of the optical channel and an optical power of each sub-carrier in the optical channel according to the optical power monitoring result.

In an example embodiment, before judging, according to the optical power monitoring result and the optical power control target value of the optical channel, whether the optical power equalization needs to be performed on the optical channel, the method includes: splitting an optical signal in the optical channel to obtain a pre-determined proportion of the optical signal; and performing optical power monitoring on the pre-determined proportion of the optical signal to obtain the optical power monitoring result.

In an example embodiment, before splitting the optical signal in the optical channel, the method further includes: determining the optical power control target value according to requirements on optical power performance of the Flex ROADM system.

In an example embodiment, performing the equalization on the optical power of the optical channel and the optical power of each sub-carrier in the optical channel according to the optical power monitoring result includes: performing, according to the optical power monitoring result, the equalization on the optical power of the optical channel and the optical power of each sub-carrier in the optical channel by means of backward control and/or forward control, wherein the backward control refers to controlling an attenuation parameter of an upstream flexible grid optical power equalization executor, and the forward control refers to controlling an attenuation parameter of a downstream flexible grid optical power equalization executor.

In an example embodiment, when an optical power equalization requirement that the Flex ROADM system has on each sub-carrier is different from an optical power equalization requirement that the Flex ROADM system has on the optical channel, in a process of performing the equalization on the optical power of the optical channel and the optical power of each sub-carrier in the optical channel according to the optical power monitoring result, the following information is also needed: information about the number of sub-carriers in the optical channel, a central frequency of each sub-carrier and a frequency width of each sub-carrier.

In an example embodiment, while performing the optical power monitoring on the pre-determined proportion of the optical signal, the method further includes: performing optical signal-to-noise ratio monitoring on the pre-determined proportion of the optical signal to obtain an optical signal-to-noise ratio detection result.

In an example embodiment, performing the equalization on the optical power of the optical channel and the optical power of each sub-carrier in the optical channel includes: performing equalization on the optical power of the optical channel and the optical power of each sub-carrier in the optical channel according to the optical power monitoring result and the reference optical signal-to-noise ratio detection result by means of the backward control and/or the forward control.

According to another aspect of the embodiments of the present disclosure, an optical power equalization apparatus applied to a flexible grid reconfigurable optical add drop multiplexer (Flex ROADM) system is provided, the optical power equalization apparatus including: a judgement component configured to judge, according to an optical power monitoring result and an optical power control target value of an optical channel, whether optical power equalization needs to be performed on the optical channel; and an equalization component configured to perform, when a judgement result of the judgement component is that the optical power equalization needs to be performed on the optical channel, equalization on an optical power of the optical channel and an optical power of each sub-carrier in the optical channel according to the optical power monitoring result.

In an example embodiment, the apparatus further includes: an optical splitting component configured to split an optical signal in the optical channel to obtain a pre-determined proportion of the optical signal; and a monitoring component configured to perform optical power monitoring on the pre-determined proportion of the optical signal to obtain the optical power monitoring result.

In an example embodiment, the apparatus further includes: a determination component configured to determine the optical power control target value according to requirements on optical power performance of the Flex ROADM system.

Through the technical solution of the present disclosure, an optical signal in an optical channel is monitored, and power equalization is performed on the optical power of the optical channel and the optical power of each sub-carrier in the optical channel according to the monitoring result, thereby solving the problem in the related art that the requirement of the optical power equalization among optical channels in the Flex ROADM system and the requirement of the optical power equalization among all sub-carriers inside the optical channel cannot be satisfied. In this way, the requirement of the optical power equalization of a flexible grid optical signal in the Flex ROADM system can be satisfied; and when the optical signal power in the Flex ROADM system changes, dynamic equalization can be implemented for the flexible grid optical signal and the optical power of sub-carriers, thus the requirement on the optical performance of the Flex ROADM system can be satisfied.

### Brief Description of the Drawings

The drawings described herein are used for providing a further understanding of the present disclosure and forming a part of the specification, and the schematic embodiments of the present disclosure and the description thereof are used to explain the present disclosure rather than to form inappropriate limitations to the present disclosure. In the accompanying drawings:
Fig. 1 is a flowchart of an optical power equalization method according to an embodiment of the present disclosure;
Fig. 2 is a structure diagram of an optical power equalization apparatus according to an embodiment of the present disclosure;
Fig. 3 is a structure diagram of an optical power equalization apparatus according to example embodiment I of the embodiments of the present disclosure;
Fig. 4 is a structure diagram of an optical power equalization apparatus according to example embodiment II of the embodiments of the present disclosure;
Fig. 5 is a structure diagram of an optical power equalization apparatus according to example embodiment 1 of the present disclosure;
Fig. 6 is a structure diagram of an optical power equalization apparatus according to example embodiment 2 of the present disclosure; and
Fig. 7 is a structure diagram of an optical power equalization apparatus according to example embodiment 3 of the present disclosure.

### Detailed Description of the Embodiments

The present disclosure is described below in detail by reference to the accompanying drawings in conjunction with embodiments. It should be noted that the embodiments of the present disclosure and the features of the embodiments can be combined with each other if there is no conflict.

An optical power equalization method is provided in the present embodiment, which can be applied to a Flex ROADM system, and may effectively support power equalization of a flexible grid optical signal.

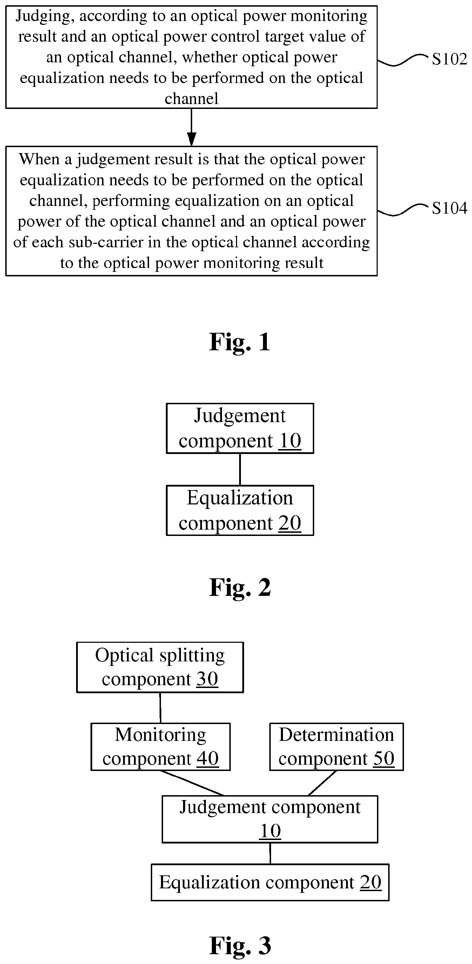

Fig. 1 is a flowchart of an optical power equalization method according to an embodiment of the present disclosure. The optical power equalization method is applied to a flexible grid reconfigurable optical add drop multiplexer (Flex ROADM) system, and as shown in Fig. 1, the method mainly includes the following steps (step S102-step S104).

In step S102, whether optical power equalization needs to be performed on the optical channel is judged according to an optical power monitoring result and an optical power control target value of an optical channel.

In step S104, when a judgement result is that the optical power equalization needs to be performed on the optical channel, equalization is performed on an optical power of the optical channel and an optical power of each sub-carrier in the optical channel according to the optical power monitoring result.

In the present embodiment, before step S102 is executed, an optical signal in the optical channel may be first split so as to obtain a pre-determined proportion of the optical signal, then optical power monitoring is performed on the pre-determined proportion of the optical signal, and finally the optical power monitoring result is obtained. Regarding the magnitude of the pre-determined proportion of the optical signal, a proportion value used in practical applications is generally relatively small, but not the smaller the better; as long as the optical power monitoring result can be acquired in a relatively accurate manner, and not so large loss is caused to the optical signal in the entire optical channel, the pre-determined proportion value may be set flexibly, for example, a pre-determined proportion value of 5% can be used to split the optical signal in the optical channel.

In an example embodiment, before the optical signal in the optical channel is split, the optical power control target value may also be determined according to requirements on optical power performance of the Flex ROADM system.

In the present embodiment, step S104 may be implemented by using the following manner: equalization may be performed on the optical power of the optical channel and the optical power of each sub-carrier in the optical channel according to the optical power monitoring result by means of backward control and/or forward control, wherein the backward control refers to controlling an attenuation parameter of an upstream flexible grid optical power equalization executor (may also be referred to as an optical power equalization execution unit, and the main function thereof is performing equalization on optical power, any device having this function can be used as an optical power equalization execution unit, for example, a wavelength selective switch (Flex WSS) may be selected to serve as the optical power equalization execution unit in practical applications, of course, the optical power equalization execution unit is not limited to be implemented by the Flex WSS), and the forward control refers to controlling an attenuation parameter of a downstream flexible grid optical power equalization executor (such as Flex WSS).

In an example embodiment, when an optical power equalization requirement that the Flex ROADM system has on each sub-carrier is different from an optical power equalization requirement that the Flex ROADM system has on the optical channel, in the process of performing the equalization on the optical power of the optical channel and the optical power of each sub-carrier in the optical channel according to the optical power monitoring result, the following information is also needed: information about the number of sub-carriers in the optical channel, a central frequency of each sub-carrier and a frequency width of each sub-carrier.

In an example embodiment, while optical power monitoring is performed on the pre-determined proportion of the optical signal, optical signal-to-noise ratio monitoring may also be performed on the pre-determined proportion of the optical signal at the same time so as to obtain an optical signal-to-noise ratio detection result.

In the present embodiment, step S104 may also be implemented by the following manner: according to the optical power monitoring result and the reference optical signal-to-noise ratio detection result first, performing equalization on the optical power of the optical channel and the optical power of each sub-carrier in the optical channel by means of the backward control and/or the forward control.

In practical applications, the implementation process of the optical power equalization method capable of being applied to the Flex ROADM system provided by the above-mentioned embodiment is generally divided into the following steps: 1. according to the optical performance requirement of the Flex ROADM system, an optical power control target value of a flexible grid optical signal of the system is determined; 2. flexible grid optical performance is monitored in an optical performance monitoring unit of the Flex ROADM system; 3. according to the optical performance monitoring data result, it is judged whether it is necessary to adjust flexible grid optical power; and 4. if it is judged to be necessary to perform optical power equalization, backward control and/or forward control is performed on a flexible grid optical power equalization execution unit so as to adjust the optical power of the optical channel and the sub-carriers.

Through the optical power equalization method provided by the method embodiment, the problem in the related art that the requirement of the optical power equalization among optical channels in the Flex ROADM system and the requirement of the optical power equalization among all sub-carriers inside the optical channel cannot be satisfied is solved, and the requirement for power equalization of the flexible grid optical signal in the optical channel can be effectively supported.

Fig. 2 is a structure diagram of an optical power equalization apparatus according to an embodiment of the present disclosure. The apparatus is used for implementing the optical power equalization method provided by the above-mentioned method embodiment. The apparatus is applied to a flexible grid reconfigurable optical add drop multiplexer (Flex ROADM) system, and as shown in Fig. 2, the apparatus mainly includes: a judgement component 10 and an equalization component 20, wherein the judgement component 10 is configured to judge, according to an optical power monitoring result and an optical power control target value of an optical channel, whether optical power equalization needs to be performed on the optical channel; and the equalization component 20 is coupled with the judgement component 10 and configured to perform, when a judgement result of the judgement component is that the optical power equalization needs to be performed on the optical channel, equalization on an optical power of the optical channel and an optical power of each sub-carrier in the optical channel according to the optical power monitoring result.

Fig. 3 is a structure diagram of an optical power equalization apparatus according to example embodiment I of the embodiments of the present disclosure, and as shown in Fig. 3, the example optical power equalization apparatus further includes: an optical splitting component 30 which is configured to split an optical signal having power loss caused by insertion-loss in the optical channel so as to obtain a pre-determined proportion of the optical signal; and a monitoring component 40 which is respectively coupled with the optical splitting component 30 and the judgement component 10, and is configured to perform optical power monitoring on the pre-determined proportion of the optical signal to obtain the optical power monitoring result, and provide the optical power monitoring result to the judgement component 10 for use.

In the example implementation, the apparatus may further include: a determination component 50 which is coupled with the judgement component 10, and is configured to determine the optical power control target value according to requirements on optical power performance of the Flex ROADM system, and provide the optical power control target value to the judgement component 10 for use.

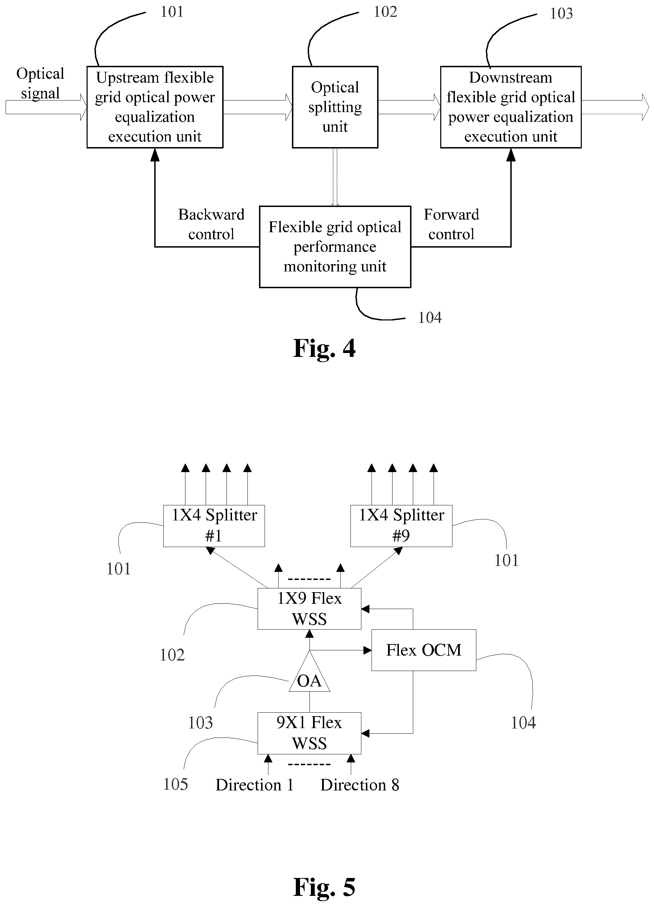

The optical power equalization method provided by the above-mentioned method embodiment and the optical power equalization apparatus provided by the above-mentioned apparatus embodiment are illustrated in more detail below in conjunction with Fig. 4 to Fig. 7 and example embodiment 1 to example embodiment 3

The structure of the optical power equalization apparatus provided by the following example embodiment II based on the embodiments of the present disclosure has the same function as the optical power equalization apparatus provided by the above-mentioned example embodiment I, and the difference only lies in the structure.

Fig. 4 is a structure diagram of an optical power equalization apparatus according to example embodiment II of the embodiments of the present disclosure, and as shown in Fig. 4, the optical power equalization apparatus applied to the Flex ROADM system provided by the example embodiment II includes: an upstream flexible grid optical power equalization execution unit 101, a downstream optical power equalization execution unit 103, a flexible grid optical performance monitoring unit 104 and an optical splitting unit 102.

In Fig. 4, the hollow arrows show the transfer direction of an optical signal, and the single solid arrows show the transfer direction of an electrical signal. The optical signal in the line of the Flex ROADM system passes through the upstream flexible grid optical power equalization execution unit, and the output goes into an optical splitting unit for splitting the optical signal to obtain a small portion of light, which then goes into the optical performance monitoring unit having the flexible grid capability; and the optical performance monitoring unit performs a performance monitoring analysis on the input optical signal, and determines the requirements of the optical power equalization according to the analysis result to control the upstream flexible grid optical power equalization execution unit and/or the downstream flexible grid optical power equalization execution unit so as to complete the optical power equalization on the flexible grid signal in the Flex ROADM system.

Both of the optical power equalization execution unit and the optical performance monitoring unit have the capability of the flexible grid, thus can meet the requirements of equalization and monitoring of the flexible grid optical signal in the Flex ROADM system. In addition, the optical power equalization execution unit not only supports the optical power adjustment of each flexible grid signal channel, but also supports the optical power adjustment among various sub-carriers in a beyond 100G optical channel having a plurality of sub-carriers which satisfies the flexible grid standard. In general, the optical power equalization execution unit in the Flex ROADM system includes one or more wavelength selective devices (Flexible grid Wavelength Selective Switch, referred to as Flex WSS for short) having the flexible grid capability.

It should be noted that the optical performance monitoring unit supports optical performance monitoring of the flexible grid, and generally is a flexible grid optical channel monitor (Flex OCM) which performs sub-carrier optical power monitoring on the input flexible grid optical signal, or, is a flexible grid optical performance monitor (Flex OPM) which is able to perform sub-carrier optical power monitoring and optical signal-to-noise ratio monitoring on the input flexible grid optical signal.

### Example embodiment 1

Fig. 5 is a structure diagram of an optical power equalization apparatus according to example embodiment 1 of the present disclosure. Fig. 5 shows a dropping part of a Flex ROADM, and as shown in Fig. 5, the optical power equalization apparatus includes: a 9*1 Flex WSS (105), a 1*9 Flex WSS (102), a Flex OCM (104), an optical amplifier (OA) (103) and 1*4 optical splitters (101), and a coherent receiver (not shown in Fig. 5) in a post-stage of the optical splitters. In Fig. 5, the 9*1 Flex WSS performs a dropping selection on flexible grid optical signals coming from eight directions, the 1*9 Flex WSS allocates the selected dropping optical signal to each port, and then the optical signal is output to the coherent receiver after being further split by the optical splitters, wherein the 9*1 Flex WSS corresponds to the optical power equalization execution unit based on the forward control in Fig. 4, the 1*9 Flex WSS corresponds to the optical power equalization execution unit based on the back control in Fig. 4, and the Flex OCM is used for completing optical power monitoring of the flexible grid. According to the optical power monitoring result, the system uses a built-in insertion-loss lookup table of the 1*9 Flex WSS (i.e. before the WSS leaves the factory, the insertion-loss of all the wavelengths of each port is tested and then stored to a component), or uses the port insertion-loss equalization characteristic thereof to control the attenuation of the downstream 1*9 Flex WSS so as to realize the optical power equalization of the flexible grid. The attenuation of the upstream 9*1 Flex WSS may also be controlled to achieve the purpose of optical power equalization of the flexible grid. The optical amplifier (OA) is used for amplifying the optical power and compensating the power loss caused by the insertion-loss of devices such as the WSS and the optical splitters, so that the optical signal power reaching the receiver satisfies the requirement of the receiver. The optical splitters are integrated inside the optical amplifier (OA) for splitting a portion of the optical signal to a monitoring port of an OA single board for output, whereas the Flex OCM receives light from the monitoring port of the OA.

### Example embodiment 2

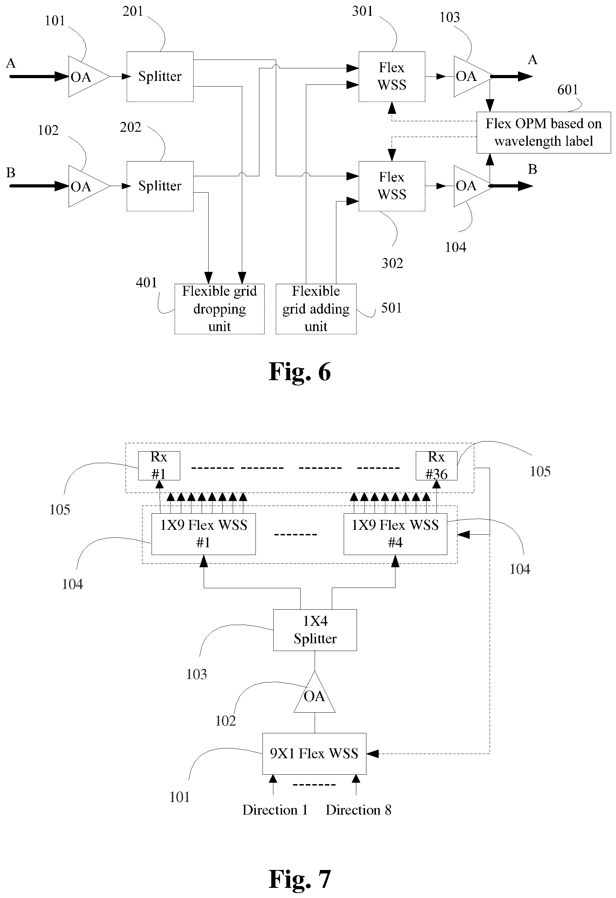

Fig. 6 is a structure diagram of an optical power equalization apparatus according to example embodiment 2 of the present disclosure. In Fig. 6, heavy lines represent a DWDM line optical signal entering and exiting a ROADM node, fine lines represent other optical signals, and dotted lines represent a feedback control path. In essence, Fig. 6 describes a schematic diagram of a two-dimensional Flex ROADM node. As shown in Fig. 6, the optical amplifiers (OA) (101, 102, 103 and 104) are respectively used for amplifying the optical signals of direction A and direction B; the optical splitters (201 and 202) are used for broadcasting the line optical signals entering the ROADM node to other line directions and a dropping direction; the Flex WSS (301 and 302) are used for performing route selection; 401 and 405 are respectively a dropping unit and an adding unit of the flexible grid; the Flex OPM 601 based on a wavelength label can not only achieve optical power monitoring for the flexible grid signal, but also can achieve optical signal-to-noise ratio monitoring for the channel of the flexible grid signal or the sub-carriers, so that a pre-stage Flex WSS can be feedback-controlled to perform flexible grid optical power adjustment, enabling the optical signal-to-noise ratio output to the receiver to satisfy the requirement of the receiver.

It should be noted that if the optical power equalization requirement that the system has on each sub-carrier in the beyond 100G channel is different from the optical power equalization requirement that the system has on each optical channel, it is also required to know information about the number of sub-carriers in the beyond 100G channel, the central frequency and the frequency width of each sub-carrier, etc., and these pieces of information can be transferred by means of a wavelength label.

### Example embodiment 3

Fig. 7 is a structure diagram of an optical power equalization apparatus according to example embodiment 3 of the present disclosure. As shown in Fig. 7, compared with the first two example embodiments, the difference of the present example embodiment mainly lies in an optical performance monitoring part. A dropping optical signal coming from each optical direction is selected via 101 in Fig. 7, i.e. the 9*1 Flex WSS, and then each dropping optical channel signal or each dropping sub-carrier signal is output via an output port of the 1*9 Flex WSS after passing through 103 and 104 in the figure, i.e. the 1*4 optical splitter and the 1*9 Flex WSS. There is a receiver 105 (the figure only describes some receivers) at the output port of the 1*9 Flex WSS. In this way, by using the built-in optical power monitoring function in each optical receiver, the optical power monitoring of the corresponding optical sub-carrier or optical channel received by the receiver can be conducted, and then the system summarizes these optical power monitoring results and adjusts, according thereto, the attenuation of the optical power of the output port of the upstream 1*9 Flex WSS and/or 9*1 Flex WSS, so as to complete the optical power equalization of the flexible grid optical signal. The optical amplifier 102 is used for amplifying the optical signal in the system so as to compensate the attenuation of the optical path caused by the WSS and the Splitter.

Here, the process of performing the optical power equalization by using the optical power equalization apparatus of embodiment 3 is appropriately described, mainly including the following steps: (1) determining the requirement for the optical power of the optical channel or optical sub-carrier signal reaching each receiver according to the requirement of a dropping receiver of the Flex ROADM system; (2) using the built-in optical power monitoring function of each receiver to perform power monitoring on the optical signal of the optical sub-carrier or the optical channel; (3) collecting, by the system, optical power monitoring data fed back by each receiver, and judging whether the optical power of the receiver meets the requirement; and (4) if the optical power of a certain receiver does not meet the requirement, adjusting the optical power by means of adjusting the attenuation of the corresponding output port of the pre-stage 1*9 Flex WSS corresponding to the receiver, so as to complete the equalization of the optical power. It should be noted that the equalization of the optical power may alternatively or further be completed by adjusting the attenuation of the port of the 9*1 Flex WSS if necessary.

By using the optical power equalization apparatus provided by the above-mentioned embodiments, the problem in the related art that the requirement of the optical power equalization among optical channels in the Flex ROADM system and the requirement of the optical power equalization among all sub-carriers inside the optical channel cannot be satisfied can be solved, and the requirement for the power equalization of the flexible grid optical signal in the optical channel can be effectively supported.

From the description above, it can be seen that the present disclosure realizes the following technical effects: according to the related art, only the optical power equalization on the fixed grid of a channel level is performed in the DWDM system without considering the condition that the optical power equalization is performed on the flexible grid optical signal in the Flex ROADM system; however, the optical power equalization method and apparatus provided by the embodiments of the present application can satisfy the requirement of the optical power equalization of the flexible grid optical signal in the Flex ROADM system, when the optical signal power in the Flex ROADM system changes, dynamic equalization for the flexible grid optical signal and the optical power of sub-carriers can be realized, and the optical performance of the Flex ROADM system can satisfy requirements.

### Industrially applicability

The technical solution of the embodiments of the present disclosure can satisfy, insofar as performing optical power equalization on a flexible grid optical signal in a Flex ROADM system is fully taken into consideration, the requirement of the optical power equalization of the flexible grid optical signal in the Flex ROADM system, and when the optical signal power in the Flex ROADM system changes, realize dynamic equalization for the flexible grid optical signal and the optical power of sub-carriers.

Apparently, a person skilled in the art should understand that some components and some steps of the present disclosure mentioned above can be implemented by universal computing apparatuses, and they can be integrated on one single computing apparatus or distributed on the network formed by multiple computing apparatuses; selectively, they can be implemented by program codes which can be executed by the computing apparatus, so that they can be stored in a storage apparatus to be executed by the computing apparatus; and under some circumstances, the shown or described steps can be executed in a sequence different from that herein, or they can be independently manufactured as each integrated circuit component, or multiple components or steps thereof can be manufactured as a single integrated circuit component to be implemented. In this way, the present disclosure is not restricted to any particular combination of hardware and software.

The descriptions above are only the preferable embodiment of the present disclosure, which are not used to limit the present disclosure, and for a person skilled in the art, the present disclosure may have a variety of changes and modifications. Any amendments, equivalent substitutions, improvements, etc. made within the principle of the present disclosure should all be included within the protection scope defined by the claims of the present disclosure.

## Claims

1. An optical power equalization method, which is applied to a flexible grid reconfigurable optical add drop multiplexer, Flex ROADM, system and comprises:
judging (S102), according to an optical power monitoring result and an optical power control target value of each optical channel, whether optical power equalization needs to be performed on each optical channel, each optical channel comprising sub-carriers; and
when the judgement result is that the optical power equalization needs to be performed on each optical channel, performing (S104) equalization on the optical power of each optical channel and the optical power of each sub-carrier in optical channel according to the optical power monitoring result;
wherein performing (S104) equalization on the optical power of each optical channel and the optical power of each sub-carrier in each optical channel according to the optical power monitoring result comprises:
performing equalization on the optical power of each optical channel and the optical power of each sub-carrier in each optical channel according to the optical power monitoring result by means of backward control and/or forward control,
wherein the backward control refers to controlling an attenuation parameter of an upstream flexible grid optical power equalization executor, and the forward control refers to controlling an attenuation parameter of a downstream flexible grid optical power equalization executor.

2. The method as claimed in claim 1, wherein before judging, according to the optical power monitoring result and the optical power control target value of each optical channel, whether the optical power equalization needs to be performed on each optical channel (S104), the method comprises:
splitting an optical signal in each optical channel to obtain a pre-determined proportion of the optical signal; and
performing optical power monitoring on the pre-determined proportion of the optical signal to obtain the optical power monitoring result.

3. The method as claimed in claim 2, wherein before splitting the optical signal in each optical channel, the method further comprises:
determining the optical power control target value according to requirements on optical power performance of the Flex ROADM system.

4. The method as claimed in claim 1, wherein when an optical power equalization requirement that the Flex ROADM system has on each sub-carrier is different from an optical power equalization requirement that the Flex ROADM system has on each optical channel,
in a process of performing the equalization on the optical power of each optical channel and the optical power of each sub-carrier in each optical channel according to the optical power monitoring result, the following information is also provided:
information about the number of sub-carriers in each optical channel, a central frequency of each sub-carrier and a frequency width of each sub-carrier.

5. The method as claimed in claim 1, wherein while performing the optical power monitoring on the pre-determined proportion of the optical signal, the method further comprises:
performing optical signal-to-noise ratio monitoring on the pre-determined proportion of the optical signal to obtain an optical signal-to-noise ratio detection result.

6. The method as claimed in claim 5, wherein performing the equalization on the optical power of each optical channel and the optical power of each sub-carrier in each optical channel comprises:
performing, according to the optical power monitoring result and the reference optical signal-to-noise ratio detection result, the equalization on the optical power of each optical channel and the optical power of each sub-carrier in each optical channel by means of the backward control and/or the forward control.

7. An optical power equalization apparatus, which is applied to a flexible grid reconfigurable optical add drop multiplexer, Flex ROADM, system and comprises:
a judgement component (10) configured to judge, according to an optical power monitoring result and an optical power control target value of each optical channel, whether optical power equalization needs to be performed on each optical channel each optical channel comprising sub-carriers; and
an equalization component (20) configured to perform, when a judgement result of the judgement component is that the optical power equalization needs to be performed on each optical channel, equalization on the optical power of each optical channel and the optical power of each sub-carrier in each optical channel according to the optical power monitoring result;
wherein the equalization component (20) is further configured to perform equalization on the optical power of each optical channel and the optical power of each sub-carrier in each optical channel according to the optical power monitoring result by means of backward control and/or forward control, wherein the backward control refers to controlling an attenuation parameter of an upstream flexible grid optical power equalization executor, and the forward control refers to controlling an attenuation parameter of a downstream flexible grid optical power equalization executor.

8. The apparatus as claimed in claim 7, further comprising:
an optical splitting component (30) configured to split an optical signal in each optical channel to obtain a pre-determined proportion of the optical signal; and
a monitoring component (40) configured to perform optical power monitoring on the pre-determined proportion of the optical signal to obtain the optical power monitoring result.

9. The apparatus as claimed in claim 8, further comprising:
a determination component (50) configured to determine the optical power control target value according to requirements on optical power performance of the Flex ROADM system.

## Patentansprüche

1. Optisches Leistungsausgleichsverfahren, das auf ein Flexible Grid Reconfigurable Optical Add Drop Multiplexer-(Flex ROADM)-System angewendet wird und Folgendes umfasst:
Beurteilen (S102) gemäß einem Ergebnis der optischen Leistungsüberwachung und eines Sollwertes der optischen Leistungssteuerung jedes optischen Kanals, ob an jedem optischen Kanal ein optischer Leistungsausgleich durchgeführt werden muss, wobei jeder optische Kanal Unterträger umfasst; und
wenn das Beurteilungsergebnis besagt, dass der optische Leistungsausgleich an jedem optischen Kanal durchgeführt werden muss, Durchführen (S104) des Ausgleichs an der optischen Leistung jedes optischen Kanals und der optischen Leistung jedes Unterträgers in einem optischen Kanal gemäß dem Ergebnis der optischen Leistungsüberwachung;
wobei das Durchführen (S104) des Ausgleichs an der optischen Leistung des optischen Kanals und der optischen Leistung jedes Unterträgers in jedem optischen Kanal gemäß dem Ergebnis der optischen Leistungsüberwachung Folgendes umfasst:
Durchführen des Ausgleichs an der optischen Leistung jedes optischen Kanals und der optischen Leistung jedes Unterträgers im optischen Kanal gemäß dem Ergebnis der optischen Leistungsüberwachung mittels Rückwärtssteuerung und/oder Vorwärtssteuerung,
wobei die Rückwärtssteuerung sich auf das Steuern eines Dämpfungsparameters einer stromaufwärts befindlichen Ausführungseinheit für den optischen Leistungsausgleich bei flexiblem Raster und die Vorwärtssteuerung sich auf das Steuern eines Dämpfungsparameters einer stromabwärts befindlichen Ausführungseinheit für den optischen Leistungsausgleich bei flexiblem Raster bezieht.

2. Verfahren nach Anspruch 1, wobei vor dem Beurteilen gemäß dem Ergebnis der optischen Leistungsüberwachung und dem Sollwert der optischen Leistungssteuerung jedes optischen Kanals, ob an jedem optischen Kanal der optische Leistungsausgleich durchgeführt werden muss (S104), das Verfahren Folgendes umfasst:
Aufspalten eines optischen Signals in jedem optischen Kanal, um einen vorbestimmten Anteil des optischen Signals zu erhalten; und
Durchführen der optischen Leistungsüberwachung am vorbestimmten Anteil des optischen Signals, um das Ergebnis der optischen Leistungsüberwachung zu erhalten.

3. Verfahren nach Anspruch 2, wobei vor dem Aufspalten des optischen Signals in jedem optischen Kanal das Verfahren ferner Folgendes umfasst:
Bestimmen des Sollwerts der optischen Leistungssteuerung gemäß den Anforderungen an das optische Leistungsverhalten des Flex ROADM-Systems.

4. Verfahren nach Anspruch 1, wobei, wenn eine Anforderung an den optischen Leistungsausgleich, die das Flex ROADM-System für jeden Unterträger aufweist, sich von einer Anforderung an den optischen Leistungsausgleich, die das Flex ROADM-System für jeden optischen Kanal aufweist, unterscheidet,
in einem Prozess des Durchführens des Ausgleichs an der optischen Leistung jedes optischen Kanals und der optischen Leistung jedes Unterträgers in jedem optischen Kanal gemäß dem Ergebnis der optischen Leistungsüberwachung auch die folgenden Informationen bereitgestellt werden:
Informationen zur Anzahl der Unterträger in einem optischen Kanal, einer zentralen Frequenz jedes Unterträgers und einer Frequenzbreite jedes Unterträgers.

5. Verfahren nach Anspruch 1, wobei während des Durchführens der optischen Leistungsüberwachung am vorbestimmten Anteil des optischen Signals das Verfahren ferner Folgendes umfasst:
Durchführen des Überwachens des optischen Signal-Rauschen-Verhältnisses am vorbestimmten Anteil des optischen Signals, um ein Detektionsergebnis zum Signal-Rauschen-Verhältnis zu erhalten.

6. Verfahren nach Anspruch 5, wobei das Durchführen des Ausgleichs an der optischen Leistung jedes optischen Kanals und der optischen Leistung jedes Unterträgers in jedem optischen Kanal Folgendes umfasst:
Durchführen gemäß dem Ergebnis der optischen Leistungsüberwachung und des Detektionsergebnisses des optischen Referenz-Signal-Rauschen-Verhältnisses des Ausgleichs an der optischen Leistung jedes optischen Kanals und der optischen Leistung jedes Unterträgers in jedem optischen Kanal mittels der Rückwärtssteuerung und/oder der Vorwärtssteuerung,

7. Optische Leistungsausgleichsvorrichtung, die auf ein Flexible Grid Reconfigurable Optical Add Drop Multiplexer-(Flex ROADM)-System angewendet wird und Folgendes umfasst:
eine Beurteilungskomponente (10), die dazu ausgelegt ist, gemäß einem Ergebnis der optischen Leistungsüberwachung und eines Sollwertes der optischen Leistungssteuerung jedes optischen Kanals zu beurteilen, ob an jedem optischen Kanal ein optischer Leistungsausgleich durchgeführt werden muss, wobei jeder optische Kanal Unterträger umfasst; und
eine Ausgleichskomponente (20), die dazu ausgelegt ist, wenn ein Beurteilungsergebnis der Beurteilungskomponente besagt, dass der optische Leistungsausgleich an jedem optischen Kanal durchgeführt werden muss, gemäß dem Ergebnis der optischen Leistungsüberwachung einen Ausgleich an der optischen Leistung jedes optischen Kanals und der optischen Leistung jedes Unterträgers in einem optischen Kanal durchzuführen;
wobei die Ausgleichskomponente (20) ferner dazu ausgelegt, einen Ausgleich an der optischen Leistung jedes optischen Kanals und der optischen Leistung jedes Unterträgers in jedem optischen Kanal gemäß dem Ergebnis der optischen Leistungsüberwachung mittels Rückwärtssteuerung und/oder Vorwärtssteuerung durchzuführen, wobei die Rückwärtssteuerung sich auf das Steuern eines Dämpfungsparameters einer stromaufwärts befindlichen Ausführungseinheit für den optischen Leistungsausgleich bei flexiblem Raster und die Vorwärtssteuerung sich auf das Steuern eines Dämpfungsparameters einer stromabwärts befindlichen Ausführungseinheit für den optischen Leistungsausgleich bei flexiblem Raster bezieht.

8. Vorrichtung nach Anspruch 7, die ferner Folgendes umfasst:
eine optische Aufspaltungskomponente (30), die dazu ausgelegt ist, ein optisches Signal in jedem optischen Kanal aufzuspalten, um einen vorbestimmten Anteil des optischen Signals zu erhalten; und
eine Überwachungskomponente (40), die dazu ausgelegt ist, eine optische Leistungsüberwachung am vorbestimmten Anteil des optischen Signals durchzuführen, um das Ergebnis der optischen Leistungsüberwachung zu erhalten.

9. Vorrichtung nach Anspruch 8, die ferner Folgendes umfasst:
eine Bestimmungskomponente (50), die dazu ausgelegt ist, den Sollwert der optischen Leistungssteuerung gemäß den Anforderungen an das optische Leistungsverhalten des Flex ROADM-Systems zu bestimmen.

## Revendications

1. Procédé d'égalisation de puissance optique, qui est appliqué à un système de multiplexeur optique à insertion-extraction reconfigurable à réseau flexible, Flex ROADM, et comprend :
le fait de juger (S102), en fonction d'un résultat de surveillance de puissance optique et d'une valeur cible de commande de puissance optique de chaque canal optique, si une égalisation de puissance optique doit être réalisée sur chaque canal optique, chaque canal optique comprenant des sous-porteuses ; et
quand le résultat du jugement est que l'égalisation de puissance optique doit être réalisée sur chaque canal optique, la réalisation (S104) d'une égalisation sur la puissance optique de chaque canal optique et la puissance optique de chaque sous-porteuse dans un canal optique en fonction du résultat de surveillance de puissance optique ;
dans lequel la réalisation (S104) d'une égalisation sur la puissance optique du canal optique et la puissance optique de chaque sous-porteuse dans chaque canal optique en fonction du résultat de surveillance de puissance optique comprend :
la réalisation d'une égalisation sur la puissance optique de chaque canal optique et la puissance optique de chaque sous-porteuse dans le canal optique en fonction du résultat de surveillance de puissance optique au moyen d'une commande en arrière et/ou d'une commande en avant,
dans lequel la commande en arrière se réfère à la commande d'un paramètre d'atténuation d'un exécuteur d'égalisation de puissance optique de réseau flexible en amont et la commande en avant se réfère à la commande d'un paramètre d'atténuation d'un exécuteur d'égalisation de puissance optique de réseau flexible en aval.

2. Procédé selon la revendication 1, dans lequel, avant le fait de juger, en fonction du résultat de surveillance de puissance optique et de la valeur cible de commande de puissance optique de chaque canal optique, si l'égalisation de puissance optique doit être réalisée sur chaque canal optique (S104), le procédé comprend :
la division d'un signal optique dans chaque canal optique pour obtenir une proportion prédéterminée du signal optique ; et
la réalisation d'une surveillance de puissance optique sur la proportion prédéterminée du signal optique pour obtenir le résultat de surveillance de puissance optique.

3. Procédé selon la revendication 2, dans lequel avant la division du signal optique dans chaque canal optique, le procédé comprend en outre :
la détermination de la valeur cible de commande de puissance optique en fonction d'exigences sur une performance de puissance optique du système Flex ROADM.

4. Procédé selon la revendication 1, dans lequel, quand une exigence d'égalisation de puissance optique que le système Flex ROADM a sur chaque sous-porteuse est différente d'une exigence d'égalisation de puissance optique que le système Flex ROADM a sur chaque canal optique,
dans un processus pour réaliser l'égalisation sur la puissance optique de chaque canal optique et la puissance optique de chaque sous-porteuse dans un canal optique en fonction du résultat de surveillance de puissance optique, les informations suivantes sont également fourniers :
des informations concernant le nombre de sous-porteuses dans un canal optique, une fréquence centrale de chaque sous-porteuse et une largeur de fréquence de chaque sous-porteuse.

5. Procédé selon la revendication 1, dans lequel, tout en réalisant la surveillance de puissance optique sur la proportion prédéterminée du signal optique, le procédé comprend en outre :
la réalisation d'une surveillance de rapport signal/bruit optique sur la proportion prédéterminée du signal optique pour obtenir un résultat de détection de rapport signal/bruit optique.

6. Procédé selon la revendication 5, dans lequel la réalisation de l'égalisation sur la puissance optique de chaque canal optique et la puissance optique de chaque sous-porteuse dans chaque canal optique comprend :
la réalisation, en fonction du résultat de surveillance de puissance optique et du résultat de détection de rapport signal/bruit optique de référence, l'égalisation sur la puissance optique de chaque canal optique et la puissance optique de chaque sous-porteuse dans chaque canal optique au moyen de la commande en arrière et/ou la commande en avant.

7. Dispositif d'égalisation de puissance optique, qui est appliqué à un système de multiplexeur optique à insertion-extraction reconfigurable à réseau flexible, Flex ROADM, et comprend :
un composant de jugement (10) configuré pour juger, en fonction d'un résultat de surveillance de puissance optique et d'une valeur cible de commande de puissance optique de chaque canal optique, si une égalisation de puissance optique doit être réalisée sur chaque canal optique, chaque canal optique comprenant des sous-porteuses ; et
un composant d'égalisation (20) configuré pour réaliser, quand un résultat du jugement du composant de jugement est que l'égalisation de puissance optique doit être réalisée sur chaque canal optique, une égalisation sur la puissance optique de chaque canal optique et la puissance optique de chaque sous-porteuse dans chaque canal optique en fonction du résultat de surveillance de puissance optique ;
dans lequel le composant d'égalisation (20)est configuré en outre pour réaliser une égalisation sur la puissance optique de chaque canal optique et la puissance optique de chaque sous-porteuse dans chaque canal optique en fonction du résultat de surveillance de puissance optique au moyen d'une commande en arrière et/ou d'une commande en avant, dans lequel la commande en arrière se réfère à la commande d'un paramètre d'atténuation d'un exécuteur d'égalisation de puissance optique de réseau flexible en amont et la commande en avant se réfère à la commande d'un paramètre d'atténuation d'un exécuteur d'égalisation de puissance optique de réseau flexible en aval.

8. Dispositif selon la revendication 7, comprenant en outre :
un composant de division optique (30) configuré pour diviser un signal optique dans chaque canal optique pour obtenir une proportion prédéterminée du signal optique ; et
un composant de surveillance (40) configuré pour réaliser une surveillance de puissance optique sur la proportion prédéterminée du signal optique pour obtenir le résultat de surveillance de puissance optique.

9. Dispositif selon la revendication 8, comprenant en outre :
un composant de détermination (50) configuré pour déterminer la valeur cible de commande de puissance optique en fonction d'exigences sur une performance de puissance optique du système Flex ROADM.
